# EUROPÄISCHE PATENTSCHRIFT

(11) **EP 2 036 658 B1**
(45) Veröffentlichungstag und Bekanntmachung des Hinweises auf die Patenterteilung: **11.12.2013**
(21) Anmeldenummer: 08006484.3
(22) Anmeldetag: 31.03.2008
(51) Int. Cl.: B23P 11/02, H05B 6/14

(54) **Vorrichtung zum Ein- und Ausspannen eines Werkzeugs durch induktives Erwärmen eines Werkzeughalters**
Device for clamping and unclamping a tool through inductive warming of a tool holder
Dispositif de serrage et de desserrage d'un outil par le réchauffement inductif d'un porte-outil

(30) Priorität: 11.09.2007 DE 102007043208
(43) Veröffentlichungstag der Anmeldung: 18.03.2009
(73) Patentinhaber: Franz Haimer Maschinenbau KG, 86568 Hollenbach-Igenhausen (DE)
(72) Erfinder: Haimer, Franz, 86568 Igenhausen (DE)
(74) Vertreter: Bockhorni & Kollegen

(56) Entgegenhaltungen:
- EP-A- 1 750 485
- DE-A1- 10 102 710
- DE-A1-102006 015 880
- FR-A- 2 909 021
- US-A1- 2001 054 471

## Beschreibung

Die Erfindung betrifft eine Vorrichtung zum induktiven Erwärmen des Hülsenabschnitts eines Werkzeughalters.

Insbesondere für mit hoher Drehzahl rotierende Werkzeuge wie etwa Fräser und Bohrer ist es bekannt, deren Schaft in einen Hülsenabschnitt eines Werkzeughalters einzuschrumpfen. Der Hülsenabschnitt wird hierzu beispielsweise mittels einer ihn umschließenden Induktionsspule erwärmt, so dass der Werkzeugschaft in die sich unter dem Wärmeinfluss aufdehnende, d.h. vergrößernde Aufnahmeöffnung des Hülsenabschnitts eingesteckt werden kann. Der Außendurchmesser des Werkzeugschafts ist etwas größer als der Nenndurchmesser der Aufnahmeöffnung, so dass das Werkzeug nach dem Abkühlen des Hülsenabschnitts im Presssitz drehfest in dem Werkzeughalter gehalten ist.

Eine hierfür geeignete induktive Heizvorrichtung ist beispielsweise die aus DE 101 02 710 A1. Diese Vorrichtung weist eine auf den Hülsenabschnitt des Werkzeughalters aufsetzbare und ihn hierbei mit radialem Abstand ringförmig umschließende Induktionsspule, auf, die mit elektrischem Wechselstrom gespeist wird. Das Magnetfeld der Induktionsspule induziert in dem elektrisch leitenden, zumeist auch magnetisierbarem Material des Werkzeughalters Induktionsströme, die den Hülsenabschnitt unmittelbar erwärmen. Die Induktionsspule erstreckt sich axial zumindest über die Eingriffslänge, mit der der Werkzeugschaft in die Aufnahmeöffnung eintaucht und schließt mit ihrer Wicklung etwa im Bereich des werkzeugseitigen Stirnendes des Hülsenabschnitts axial mit diesem ab. In radialer Richtung verläuft der Innenumfang der Induktionsspule im Abstand zum Hülsenabschnitt, um ein und dieselbe Induktionsspule bei Werkzeughaltern mit unterschiedlichem Außendurchmesser des Hülsenabschnitts nutzen zu können.

An ihren Stirnseiten und an ihrem Außenumfang ist die Wicklung der Induktionsspule mit einer Flusskonzentratoranordnung aus einem magnetisierbaren, d.h. ferromagnetischem oder ferrimagnetischem Material ummantelt, dessen, bezogen auf Luft, hohe magnetische Leitfähigkeit den magnetischen Fluss im Wesentlichen auf diesen Mantel konzentriert. Das magnetisierbare Material der Flusskonzentratoranordnung ist elektrisch nicht leitend, um zu verhindern, dass sich auch der Flusskonzentratormantel induktiv erwärmt. Der dem werkzeugseitigen Ende des Hülsenabschnitts benachbarte Bereich des Flusskonzentratormantels ist als meist ringartiger Konzentratorkörper ausgebildet, welcher unmittelbar auf dem werkzeugseitigen Stirnende des Hülsenabschnitts axial aufliegt. Sinn und Zweck eines solchen Konzentratorkörpers ist es, das Feld gezielt in den Hülsenabschnitt einzuleiten um es dort effektiv wirksam werden zu lassen und gleichzeitig zu verhindern, dass der aus dem Hülsenabschnitt herausragende Werkzeugschaft durch den Streufeldanteil induktiv erhitzt wird, wodurch sich der Werkzeugschaft ebenfalls dehnen würde, was unerwünscht ist. Vorteilhafterweise ist ein solcher Konzentratorkörper als Abschirmkragen ausgebildet, etwa so, wie in der DE 101 02 710 A1 beschrieben. Dieser Abschirmkragen fängt einen wesentlichen Teil der zunächst in den Außenraum ausgetretenen Feldlinien ab. Er verhindert dadurch auf wirksame Art und Weise, dass sich der herausstehende Werkzeugschaft erhitzt.

Am Außenumfang der Induktionsspule ist eine Jochanordnung aus magnetisierbarem, elektrisch nicht oder im Wesentlichen nicht leitendem Material angeordnet. Dadurch wird auch im Bereich des Außenumfangs der Induktionsspule das Streufeld wirksam herabgesetzt.

Gleichwohl ist auch bei einer solchen Anordnung nach wie vor noch ein messbares Streufeld in der Außenumgebung der Induktionsspule bzw. der gesamten Vorrichtung vorhanden - mag dieses Streufeld auch die Primärfunktion des Ein- und Ausschrumpfens in der überwiegenden Zahl der Anwendungsfälle nicht entscheidend zu beeinträchtigen.

In jüngster Zeit ist auch außerhalb spezieller, von je her besonders interessierter Kreise ein vermehrtes Interesse am Thema "elektrische Streufelder" festzustellen.

Es ist Aufgabe der Erfindung, eine Möglichkeit zur Herabsetzung des Feldes in der Außenumgebung der Induktionsspule bzw. der Vorrichtung anzugeben.

Diese Aufgabe wird durch die Merkmale des kennzeichnenden Teils des Anspruchs 1 gelöst.

Dabei ist vorgesehen, dass eine Jochanordnung zusammen mit einem Hülsenabschnitt eines Werkzeughalters einen zumindest abschnittsweise geschlossenen magnetischen Kreis um eine Induktionsspule herum bildet und dass dem magnetischen Kreis ein Induktionskörper oder Induktionsaufsatz aus elektrisch leitfähigem und magnetisch nicht leitendem Material zugeordnet ist.

In diesem Induktionskörper oder Induktionsaufsatz kommt ein magnetisches Feld zur Entstehung, das das in der Außenumgebung der Induktionsspule bzw. der Vorrichtung verlaufende Feld der Induktionsspule überlagert und so teilweise abschwächt. Auf diese Art und Weise wird eine (i. d. R. zusätzliche) aktive Magnetfeldabschirmung erreicht - verglichen mit der Abschirmung, die durch Polschuhe und dergl., die aus Materialien erzielt werden, die elektrisch nichtleitend und magnetisch leitend sind, wie etwa Ferrite und die daher als "passive Abschirmung" bezeichnet werden können.

Der Konzentratorkörper trägt den Induktionsaufsatz oder der Induktionskörper ist unabhängig vom Konzentratorkörper im Bereich der dem Ende der Hülsenpartie zugewandten Stirnseite der Spule angeordnet. Dabei ist der Induktionsaufsatz derart am Konzentratorkörper bzw. der Induktionskörper derart angeordnet, dass er von einem Teil des streckenweise außerhalb des Konzentratorkörpers verlaufenden Feldes derart durchflutet wird, dass in dem Induktionskörper, oder Induktionsaufsatz selbst Strom induziert wird. Vereinfacht gesagt, sorgt also das abzuschwächende Feld in der Außenumgebung der Spule automatisch dafür, dass vom Induktionskörper oder Induktionsaufsatz ausgehend ein abschwächend wirkendes Gegenfeld entsteht.

Weiterhin ist der Induktionskörper oder Induktionsaufsatz so positioniert und räumlich ausgestaltet, dass von dem in ihm induzierten Strom ein Gegenfeld erzeugt wird, welches das Magnetfeld der Spule so überlagert, dass es insgesamt zu einer zumindest lokalen Verringerung des die Außenumgebung der Vorrichtung durchflutenden Magnetfeldes der Spule kommt.

Weiterhin ist der Induktionsaufsatz oder Induktionskörper im Bereich der dem Ende der Hülsenpartie zugewandten Stirnseite der Spule angeordnet.

Erfindungsgemäß ist der Induktionsaufsatz oder Induktionskörper so positioniert und räumlich ausgestaltet, dass von dem in ihm induzierten Strom ein Gegenfeld erzeugt wird, welches das Magnetfeld der Spule so überlagert, dass es insgesamt zu einer zumindest lokalen Verringerung des die Außenumgebung der Vorrichtung durchflutenden Magnetfeldes der Spule kommt.

Bevorzugt ist der Induktionskörper oder Induktionsaufsatz als ein - i. d. R. in Umfangsrichtung - in sich geschlossener Ring ausgeführt. Er gewährleistet auf diese Art und Weise eine optimale Abschirmung, da die Feldlinien des hochfrequenten Feldes dann auch wirklich vollständig erfasst werden und keine Möglichkeit finden, der erfindungsgemäßen Wirkung des Induktionsaufsatzes zu entgehen.

Besonders bevorzugt ist eine Ausführung des Induktionskörpers oder Induktionsaufsatzes aus Kupfer. Insoweit hat sich gezeigt, dass gerade bei der erfindungsgemäßen Anwendung Kupfer allen anderen, auf den ersten Blick als gleichwertig erscheinenden Materialien (wie etwa Aluminium), eine deutlich überlegene Wirkung entfaltet.

Bevorzugt ist der Induktionsaufsatz so ausgebildet, dass er den Querschnitt eines gestülpten Rings aufweist. Der Induktionsaufsatz erstreckt sich dadurch vom Konzentratorkörper aus in radialer Richtung über den Konzentrator in Richtung nach außen hinaus und verläuft vom Konzentratorkörper aus mit einer leichten Neigung (vorzugsweise zwischen 10 Grad und 20 Grad) relativ zur Horizontalen nach oben, bei bestimmungsgemäßer Montage des Konzentratorkörpers unter horizontaler Ausrichtung desselben. Auf diese Art und Weise bildet er für einen wesentlichen Teil der Feldlinien, die ansonsten die Tendenz besitzen, zunächst den Konzentratorkörper zu umgehen, eine Art Hindernis, das wirksam von diesen Feldlinien durchflutet wird. Die besagten Feldlinien werden also sehr effektiv genutzt, um Wirbelströme und damit ein entsprechendes Gegenfeld in dem Induktionsaufsatz zu erzeugen.

Vorzugsweise ist vorgesehen, dass der Konzentratorkörper auf seiner radialen Außenseite in einem Haltering steckt. Dieser dient zur Positionierung des Konzentratorkörpers gegenüber der Magnetspulenanordnung. Dabei hält der Haltering gleichzeitig auch den Induktionsauf satz gegenüber dem Konzentratorkörper in Position - vorzugsweise in einer Position, in der der Konzentratorkörper und der Induktionsaufsatz flächig miteinander in unmittelbarem Kontakt stehen. Damit kann schnell in nennenswertem Umfang Wärme vom Induktionsaufsatz in den Konzentratorkörper abfließen. Durch eine solche Gestaltung wird zudem auch die Handhabung vereinfacht, da der Konzentratorkörper und der dazu passende Induktionsaufsatz stets fest miteinander verbunden sind und ggf. gemeinsam gegen eine entsprechende Einheit aus einem anderweitigen Konzentratorkörper und einem anderweitigen dazu passenden Induktionsaufsatz ausgetauscht werden könne, ohne dass sich der Benutzer Gedanken darüber machen müsste, welcher Induktionsaufsatz welchem Konzentratorkörper zuzuordnen ist. Zudem ist, wenn der Konzentratorkörper und der Induktionsaufsatz flächig miteinander in unmittelbarem Kontakt stehen, ein sehr wirksames magnetisches Zusammenspiel zwischen dem Konzentratorkörper und den Induktionsaufsatz gewährleistet, nämlich ein durchgängig verstärkt abgeschirmter Bereich.

Im Rahmen einer vorteilhaften Weiterbildung ist vorgesehen, den Haltering als Kunststoffring auszuführen. Mittels eines Kunststoffrings kann am einfachsten der Tatsache Rechnung getragen werden, dass es zwischen dem Konzentratorkörper und dem Induktionsaufsatz zu durch Wärmedehnung bedingten Relativbewegungen kommt - was nahezu unvermeidlich ist, da sich der Induktionsaufsatz, anders als der Konzentratorkörper, unmittelbar durch die in ihm entstehenden Wirbelströme erwärmt.

Vom Prinzip her kann der Haltering allerdings auch als Keramikring ausgeführt sein. Dies nämlich dann, wenn der Keramikring den Konzentratorkörper und den Induktionsaufsatz mit etwas Spiel umschließt, so, dass der Keramikring durch Wärmedehnungen des Induktionsaufsatzes oder des Konzentratorkörpers nicht gesprengt wird. In Anbetracht dessen führen Halteringe aus Keramik aber deutlich eher zu Fertigungs- und Toleranzproblemen, als die klar bevorzugten Halteringe aus Kunststoff.

Sofern der Haltering ein Kunststoffring ist, wird die gesamte Einheit aus dem Induktionsaufsatz, dem Konzentratorkörper und dem Kunststoffring idealerweise dadurch hergestellt, dass der Konzentratorkörper und der Induktionsaufsatz gemeinsam in eine entsprechende Kunststoffspritzmaschine eingelegt werden und mit dem nach seinem Erstarren den Haltering bildenden Kunststoff umspritzt werden.

Der Haltering besteht aus einem wärmebeständigen Kunststoff, der vorzugsweise auch bei Temperaturen oberhalb von 120 °C, idealerweise bis 150 °C so weit formbeständig ist, dass seine Haltefunktion gewährleistet bleibt. Die Fertigung des Halterings aus wärmebeständigem Kunststoff macht es möglich, dass mehrere Ein- oder Ausschrumpfzyklen ohne Pause nacheinander vorgenommen werden können - und zwar ohne, dass die Einheit aus dem Induktionsaufsatz, den Konzentratorkörper und dem Haltering versagt, indem sich zumindest der Induktionsaufsatz soweit erhitzt hat, dass er den Kunststoff des Halterings thermisch schädigt. Als für den vorliegenden Einsatzzweck in Betracht kommende Kunststoffe sind insbesondere PI- oder auch PTFE-Kunststoffe zu nennen.

Im Rahmen einer besonders bevorzugten Ausführungsform umgreift der Kunststoff des Halterings den Induktionsaufsatz ganz oder teilweise, und zwar insbesondere auch im Bereich seines Außenumfangs, den der Benutzer unwillkürlich anfassen würde, wenn er die Einheit aus dem Induktionsaufsatz, den Konzentratorkörper und dem Haltering aus der Vorrichtung herausheben will. Auf diese Art und Weise wird die Gefahr herabgesetzt, dass sich der Benutzer unvermittelt am erhitzten Induktionsaufsatz verbrennt, weil er die hervorragend wärmeleitende Oberfläche des Induktionsaufsatzes unmittelbar berührt.

Idealerweise ist der Induktionsaufsatz zumindest abschnittweise mit einem unterbrochenen Berührungsschutz aus Kunststoff versehen bzw. überzogen. Bei diesem unterbrochenen Berührungsschutz handelt es sich i. d. R. um ein Teil aus vorzugsweise temperaturbeständigem Kunststoff (z. B. ein Kunststoff, wie oben genannt, oder auch Nylon), das in engen Abständen mit einer Vielzahl von Durchbrüchen versehen ist, also "unterbrochen" ist. Über diese Durchbrüche erlangt die kühlende (angeblasene oder konvektiv anströmende) Luft bzw. das Kühlmittel unmittelbaren Zutritt zu der metallenen Oberfläche des Induktionsaufsatzes, wodurch der Induktionsaufsatz trotz des Berührungsschutzes effektiv gekühlt werden kann. Obwohl eng beabstandet, ist jeder der Durchbrüche im Verhältnis zu den zwischen den Durchbrüchen befindlichen Stegen so klein, dass die Haut des Benutzers auch beim Anfassen des auf ca. 80 °C aufgeheizten Induktionsaufsatzes im Wesentlichen nicht durch die Durchbrüche hindurch unmittelbar mit der metallenen Oberfläche des Induktionsaufsatzes in Kontakt kommt und dann auf Grund der hohen Wärmeleitfähigkeit dieser Oberfläche verbrennt. Da vom Einzelfall abhängig, verbietet es sich, konkrete Angaben zu machen, wie groß und wie eng beabstandet die Durchbrüche in Einzelfall sein müssen. Der Fachmann kann dies jedoch mittels einiger weniger Versuche für den konkreten Einzelfall ermitteln - unter Berücksichtigung der Maßgabe, dass der Luft- bzw. Kühlmittelzutritt zur metallenen Oberfläche des Induktionsaufsatzes i. d. R. nur möglichst wenig behindert werden sollte, so dass die metallene Oberfläche nur soweit abgedeckt sein sollte, wie zur Sicherstellung hinreichenden Berührungsschutzes erforderlich. Der Berührungsschutz kann entweder als integraler Teil des Halterings oder als separates Bauteil ausgeführt sein. Idealerweise ist der unterbrochene Berührungsschutz als eine Art zumindest abschnittweise geschlossener Käfig ausgeführt. Nämlich als ein Käfig, der allenfalls lokal mit der Oberfläche des Induktionsaufsatzes in Kontakt steht und dessen "Gitterabschnitt" im Wesentlichen von der Oberfläche des Induktionsaufsatzes beabstandet ist. Stattdessen kann der Berührungsschutz auch unmittelbar an der Oberfläche des Induktionsaufsatzes anliegen, z. B. nach Art eines Netzes oder eines Rosts.

Idealerweise wird der Induktionsaufsatz so gestaltet, dass er eine derart große Wärmekapazität bzw. Masse aufweist, dass die Endtemperatur des Induktionsrings auch nach mehreren unmittelbar im Anschluss aneinander durchgeführten Schrumpf-Zyklen, bei denen jeweils ein kalter Werkzeughalter soweit erhitzt wird, dass das ihm zugeordnete Werkzeug eingesetzt und wieder herausgenommen werden kann, kleiner 100 °C bzw. besser kleiner 80 °C ist. Dies ist deshalb entscheidend, weil in dem Induktionsaufsatz durch die dort induzierten Ströme eine nicht unerhebliche Wärme erzeugt wird, die in der Kürze der Zeit nur unvollständig an die umgebende Außenluft abgegeben werden kann. Dennoch darf sich der Induktionskörper nicht beliebig erwärmen. Dem wird in besagter Weise abgeholfen.

Im Folgenden soll die Erfindung anhand einer Zeichnung näher erläutert werden, woraus sich auch weitere Details zur Wirkungsweise und den Vorteilen der Erfindung ergeben. Hierbei zeigt:
Fig. 1 einen Axiallängsschnitt durch eine erfindungsgemäße Vorrichtung zum induktiven Erwärmen eines Werkzeughalters mit einem scheibenförmigen Polschuh am werkzeugseitigen Ende des Werkzeughalters;
Fig. 2 einen Axiallängsschnitt durch die Einheit aus dem Konzentratorkörper, dem Induktionsaufsatz und dem Haltering.
Fig. 3 einen Halbschnitt durch ein zweites, alternatives Ausführungsbeispiel. Bevor im Einzelnen auf den erfindungsgemäßen Induktionsaufsatz eingegangen wird, sei zunächst ganz allgemein die Funktion der von Fig. 1 gezeigten Vorrichtung erläutert.

Zu erkennen ist der Werkzeughalter 1 aus einem zumindest elektrisch leitenden, hier aber auch magnetisch leitendem Material, wie zum Beispiel Stahl. An seinem einen Ende weist er einen Hülsenabschnitt 2 auf. Der Hülsenabschnitt 2 enthält zentrisch zur Drehachse 3 des Werkzeughalters eine Aufnahmeöffnung 4 für ein mit seinem Schaft 5 in die Aufnahmeöffnung 4 einsetzbares, nicht näher dargestelltes Rotationswerkzeug, beispielsweise einen Bohrer, einen Fräser oder auch ein Reibwerkzeug.

Der Außendurchmesser des Schafts 5 ist etwas größer als der freie Nenndurchmesser der Aufnahmeöffnung 4, so dass der Schaft 5 in dem Hülsenabschnitt 2 im Presssitz gehalten ist, wodurch das erforderliche Drehmoment auf das Rotationswerkzeug übertragen werden kann. Um den Werkzeugschaft 5 in den Werkzeughalter 1 einsetzen oder aus diesem entnehmen zu können, wird der Hülsenabschnitt 2 durch Erwärmen aufgeweitet. Die Erwärmung erfolgt mittels einer auf den Hülsenabschnitt 2 aufgesetzten und dessen Mantelfläche mit radialem Abstand konzentrisch umschließenden Induktionsspule 6. Diese wird mit Wechselstrom oder gepulstem Gleichstrom einer Frequenz von beispielsweise 5 bis 20 kHz gespeist. Der von einer angenähert zylindrischen Wicklung 7 erzeugte Magnetfluss induziert in dem Hülsenabschnitt 2 Wirbelströme. Diese erwärmen den Hülsenabschnitt 2 in relativ kurzer Zeit und weiten damit die Aufnahmeöffnung 4 hinreichend weit auf um den Werkzeugschaft einschieben oder herausziehen zu können.

Die Induktionsspule 6 hat innen liegend einen aus temperaturfestem Kunststoff oder Keramik bestehenden Spulenkörper 8, auf den die viellagige Wicklung 7 aufgebracht ist. Der Außenumfang und die dem Werkzeug axial abgewandte Stirnfläche der Wicklung 7 ist mit einer ein-oder mehrteiligen Jochanordnung 9 aus einem magnetisch leitenden und elektrisch nicht leitenden Material überdeckt, welches den magnetischen Fluss in diesem Umgebungsbereich der Wicklung 7 auf die Jochanordnung 9 bündelt und konzentriert.

Die mit der Jochanordnung 9 versehene Wicklung 7 erstreckt sich im Wesentlichen über die gesamte für die Aufnahme des Werkzeugschafts 5 bestimmte Länge der Aufnahmeöffnung 4 bzw. des Hülsenabschnitts 2.

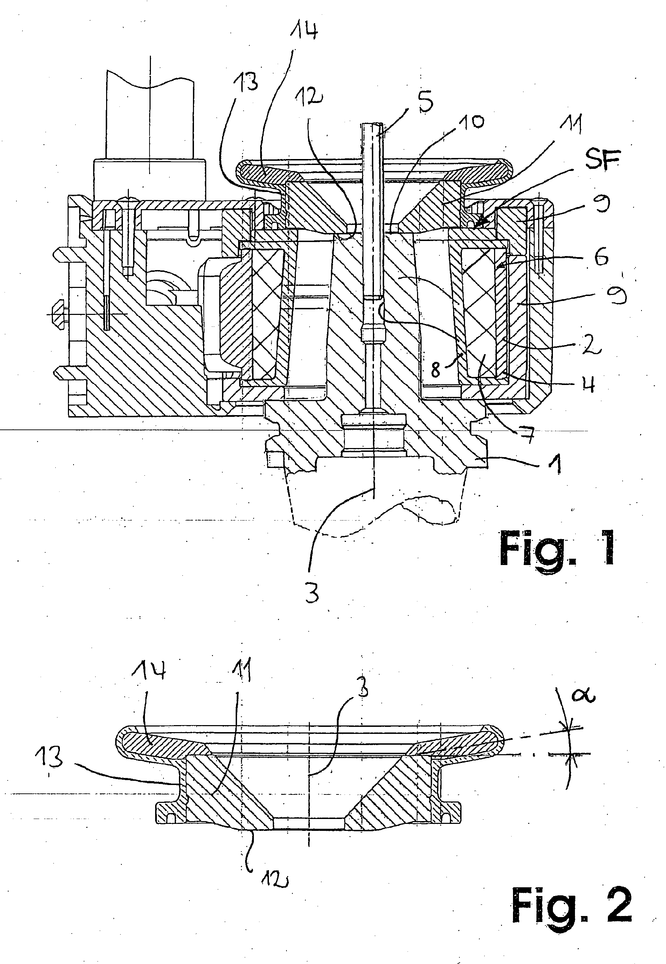

Um den magnetischen Fluss von der auf dieser Seite etwas über die Wicklung 7 axial überstehenden Jochanordnung 9 optimal zur Stirnseite 10 des Hülsenabschnitts 2 zu lenken und gleichzeitig den über den Hülsenabschnitt 2 vorstehenden Teil des Werkzeugschafts 5 abzuschirmen und vor induktiver Erwärmung zu schützen, ist der Stirnfläche SF der Spule ein Konzentratorkörper 11 zugeordnet, der das aus der Jochanordnung 9 austretende Feld beeinflusst. Dieser Konzentratorkörper 11 ist, wie von Fig. 1 gezeigt, bevorzugt in Form eines Abschirmkragens ausgebildet. Er besteht aus einem den magnetischen Fluss konzentrierenden, magnetisch-leitendem Material, das allerdings im Wesentlichen nicht elektrisch leitfähig ist, weshalb es sich unter dem Einfluss des Magnetfeldes nicht nennenswert aufheizt.

Der so ausgebildete Konzentratorkörper 11 verläuft allseitig im Abstand von der Jochanordnung 9. Die Jochanordnung 9 erstreckt sich im dargestellten Ausführungsbeispiel nicht über die werkzeugseitige Stirnfläche der Wicklung 7 hinweg, sondern steht lediglich etwas über diese Stirnfläche vor, kann aber bedarfsweise auch die Spule überdecken. Der Konzentratorkörper hat dem Hülsenabschnitt 2 axial zugewandt eine achsnormal verlaufende, ebene Auflagefläche 12, mit der er an der hier ringförmigen Stirnfläche des Hülsenabschnitts 2 flächig aufliegt.

Der Konzentratorkörper 11 ist mit einem Haltering 13 aus einem auch gegenüber höheren Temperaturen beständigen magnetisch nicht und elektrisch nicht-leitendem Material, insbesondere Kunststoff versehen. Mittels dieses Halterings 13 ist der Konzentratorkörper 11 relativ zur Induktionsspule 6 festgelegt - jedoch so, dass er ggf. gegen einen einer Auswahl aus etwas anders dimensionierten Konzentratorkörpern (nicht gezeigt) ausgewechselt werden kann. Der Konzentratorkörper 11 sorgt auf diese Weise für eine korrekte axiale Positionierung des jeweils eingesetzten Hülsenabschnitts 2 (des Werkzeughalters) relativ zur Induktionsspule 6. Darüber hinaus kann er auch zur Anpassung ein und derselben Induktionsspule 6 an Werkzeughalter mit unterschiedlichen Hülsenabschnitten 2 ausgewechselt werden.

Der zwischen der Jochanordnung 9 und dem hier in Form eines Abschirmkragens ausgeführten Konzentratorkörper 11 verbleibende Ringspalt erhöht zwar den Widerstand im magnetischen Kreis der Induktionsspule 6. Dennoch erlaubt der Konzentratorkörper 11 wegen seiner Ausgestaltung als Abschirmkragen eine im Bereich des Werkzeugschafts 5 in hohem Maße streufeldfreie Konzentration des magnetischen Flusses auf den Hülsenabschnitt 2. Auf diese Weise lässt sich der Hülsenabschnitt 2 induktiv erwärmen, ohne dass es zu einer übermäßigen Erwärmung des Werkzeugschafts 5 kommt.

Erfindungsgemäß trägt hier Konzentratorkörper 11 auf seiner der Induktionsspule 6 abgewandten Außenseite einen Induktionsaufsatz 14. Anders als der Konzentratorkörper besteht der Induktionsaufsatz aus einem elektrisch gut leitfähigen aber nicht magnetisch-leitenden Werkstoff.

Der Induktionsaufsatz 14 steht hier in unmittelbarem, großflächigem Kontakt mit dem Konzentratorkörper 11. Induktionsaufsatz und Konzentratorkörper berühren sich hier im Wesentlichen entlang der gesamten oberen Planfläche des Konzentratorkörpers. Auf diese Art und Weise kann der Induktionsaufsatz 14 erforderlichenfalls sehr schnell einen Teil der in ihm erzeugten Wärmeenergie an den Konzentratorkörper abgeben, wodurch einer eventuellen Überhitzung des Induktionsaufsatzes vorgebeugt wird.

Der Induktionsaufsatz 14 ragt in radialer Richtung nach außen über den Konzentratorkörper hinaus. Vorzugsweise verläuft er dabei nach oben geneigt, (etwa in einem Winkel α von 10 bis 20 Grad zur Horizontalen), so, wie von den Fig. 1 und 2 gezeigt. Man kann den Induktionsaufsatz 14 daher als mit seinem Außenumfang nach oben gestülpten Kreisring umschreiben. Er bildet auf diese Art und Weise einen nach außen über den Konzentratorkörper hinausragenden Kragen. Dieser Kragen bildet eine Art Hindernis, das von einem wesentlichen Teil der Feldlinien, die ansonsten die Tendenz besitzen zunächst den Konzentratorkörper zu umgehen und erst von einem der Achse 3 höheren Bereich her kommend in den Konzentratorkörper einzutreten, zwangsläufig durchflutet wird.

Auf Grund dessen werden in dem Induktionsaufsatz 14 Wirbelströme erzeugt, die naturgemäß ihrerseits ein magnetisches Feld ausbilden, eine Art Gegenfeld. Somit sorgt also das abzuschwächende Feld in der Außenumgebung der Spule 9 automatisch dafür, dass vom Induktionsaufsatz 14 ausgehend ein abschwächend wirkendes Gegenfeld entsteht.

Der Induktionsaufsatz ist hier als ein in Umfangsrichtung sich geschlossener Kupferring ausgeführt. Vom Grundsatz her wäre zwar beispielsweise auch eine Ausführung als Aluminiumring möglich. Es hat sich jedoch gezeigt, dass eine Ausführung als Kupferring dem Induktionsaufsatz für den hier vorliegenden Anwendungsfall eine wesentlich effektivere Wirkung verleiht - bzw. zu einer wesentlich geringeren Aufheizung des Induktionsaufsatzes führt.

Der Konzentratorkörper und der Induktionsaufsatz stecken in dem bereits oben kurz angesprochenen, gemeinsamen Haltering 13. Der Haltering 13 besteht aus einem hochgradig temperaturbeständigen Kunststoff, der an den Konzentratorkörper 11 und den Induktionsaufsatz 14 angespritzt ist. Der Kunststoff des Halterings umgreift den Induktionsaufsatz auch im Bereich seines größten Außendurchmessers und verhindert so, dass der Benutzer an dieser Stelle unmittelbar mit der freiliegenden, heißen und naturgemäß gut wärmeübertragenden Oberfläche des Induktionskörpers 14 in Kontakt kommt.

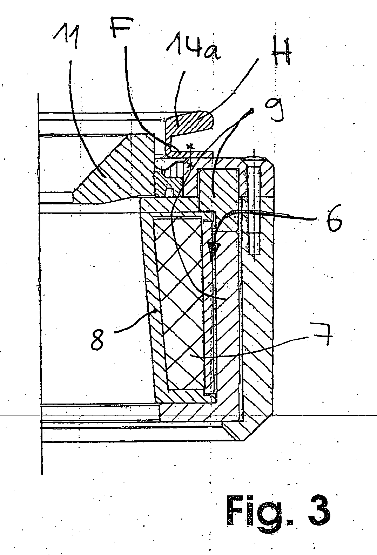

Die Fig. 3 zeigt einen Halbschnitt durch ein weiteres Ausführungsbeispiel der Erfindung.

Dieses Ausführungsbeispiel unterscheidet sich von dem zuvor an Hand der Fig. 1 und 2 beschriebenen Ausführungsbeispiel dadurch, dass hier nicht der Konzentrationskörper 11 selbst mit einem Induktionsaufsatz versehen ist, sondern direkt an der Spulenanordnung bzw. am Spulengehäuse (insbesondere im Bereich der dem Ende des Hülsenabschnitts zugewandten Stirnseite der Spule 6) ein hier ebenfalls kragenartig ausgeführter Induktionskörper 14a vorgesehen ist. Die obigen Ausführungen gelten hier also sinngemäß, soweit nicht körperliche Merkmale des obigen Induktionsaufsatzes angesprochen werden, die in Fig. 3 nicht anzutreffen sind.

Auch das Funktionsprinzip dieses Induktionskörpers 14a ist das gleiche, wie oben für den Induktionskörper in Form des Induktionsaufsatzes 14 beschrieben - der Induktionskörper 14a wird vom Feld der Spule 6 durchflutet, wodurch in ihm Strom induziert wird. Dieser Strom erzeugt ein Gegenfeld, welches das Hauptfeld partiell schwächt bzw. lenkt, so dass man auch hier von einer aktiven Schirmung reden kann.

Anzumerken ist nur noch, dass der Fußabschnitt F, der den kragenartigen Hauptabschnitt H des Induktionskörpers 14a hält, vorzugsweise nicht aus dem gleichen, elektrisch leitenden und magnetisch nicht leitenden Material besteht, wie der kragenartige Hauptabschnitt H, sondern vorzugsweise aus einem Kunststoffmaterial. Dadurch wird die Wärmebelastung des Induktionskörpers wesentlich verringert - verglichen dem Fall, dass der Fußabschnitt F aus elektrisch leitfähigem Material gefertigt wird.

Eine Befestigung bzw. Halterung des Induktionskörpers unabhängig vom Konzentratorkörper ist vor allem für Systeme mit verstellbaren Spulen und/oder verstellbaren Konzentratorkörpem, die zum Zwecke der Umrüstung des Systems für das Schrumpfen verschiedene Hülsendurchmesser nicht ausgewechselt werden müssen, von erheblicher praktischer Bedeutung.

Des Weiteren ist festzuhalten, dass vergleichbar wirkende, aktive Abschirmelemente z. B. auch am Umfang der Spule angebracht sein können, z. B. um die Bedientaste der Spule abzuschirmen.

Abschließend noch die Feststellung, dass Induktionsaufsätze der hier beschriebenen Art selbstverständlich nicht ausschließlich im Zusammenspiel mit als Abschirmkrägen ausgestalteten Konzentratorkörpern ihre Wirkung entfalten.

### Bezugszeichenliste

- 1.: Werkzeughalter
- 2.: Hülsenabschnitt
- 3.: Drehachse Werkzeughalter
- 4.: Aufnahmeöffnung
- 5.: Werkzeugschaft
- 6.: Induktionsspule
- 7.: Wicklung der Induktionsspule
- 8.: Spulenkörper
- 9.: Jochanordnung
- 10.: Stirnseite des Hülsenabschnitts
- 11.: Konzentratorkörper
- 12.: Auflagefläche
- 13.: Haltering
- 14.: Induktionsaufsatz
14a. Induktionskörper

- SF =: Stirnfläche Spule
- F =: Fußabschnitt
- α =: Neigungswinkel

## Patentansprüche

1. Vorrichtung zum Ein- und Ausspannen von einen Werkzeugschaft aufweisenden Werkzeugen, mit welcher ein eine zentrische Aufnahmeöffnung (4) für einen Schaft (5) eines Rotationswerkzeugs enthaltender Hülsenabschnitt (2) eines Werkzeughalters (1) induktiv erwärmt wird, der den in der Aufnahmeöffnung (4) sitzenden Schaft (5) des Werkzeugs im Presssitz hält und bei Erwärmung freigibt, mit einer Induktionsspulenanordnung mit wenigstens einer für die Erwärmung des Hülsenabschnitts (2) mit elektrischem Strom speisbaren Induktionsspule (6) und mit einer Jochanordnung (9) aus magnetisierbarem, elektrisch nicht oder im Wesentlichen nicht leitendem Material, wobei die Vorrichtung einen den magnetischen Fluss der Induktionsspule (6) auf den Bereich des werkzeugseitigen Endes des Hülsenabschnittes (2) konzentrierenden magnetisch leitenden und elektrisch nicht oder im Wesentlichen nicht leitenden Konzentratorkörper (11) aufweist und die Jochanordnung (9) zusammen mit dem Hülsenabschnitt (2) einen zumindest abschnittsweise geschlossenen magnetischen Kreis um die Induktionsspule herum bildet, **dadurch gekennzeichnet, dass** und dem magnetischen Kreis ein Induktionsaufsatz (14) oder Induktionskörper (14a) aus elektrisch leitfähigem und magnetisch nicht leitendem Material zugeordnet ist, wobei der Konzentratorkörper (11) den Induktionsaufsatz (14) trägt oder der Induktionskörper (14a) unabhängig vom Konzentratorkörper im Bereich der dem Ende der Hülsenpartie (2) zugewandten Stirnseite der Spule angeordnet ist, wobei der Induktionsaufsatz (14) derart am Konzentratorkörper (11) bzw. der Induktionskörper (14a) derart angeordnet ist, dass er von einem Teil des außerhalb des Konzentratorkörpers (11) verlaufenden Feldes derart durchflutet wird, dass in dem Induktionsaufsatz (14) oder Induktionskörper (14a) Strom induziert wird, wobei der Induktionsaufsatz (14) oder Induktionskörper (14a) so positioniert und räumlich ausgestaltet ist, dass von dem in ihm induzierten Strom ein Gegenfeld erzeugt wird, welches das Magnetfeld der Spule (6) so überlagert, dass es insgesamt zu einer zumindest lokalen Verringerung des die Außenumgebung der Vorrichtung durchflutenden Magnetfeldes der Spule (6) kommt.

2. Vorrichtung nach einem der vorhergehenden Ansprüche, **dadurch gekennzeichnet, dass** der Induktionsaufsatz (14) oder Induktionskörper (14a) als in Umfangsrichtung elektrisch in sich geschlossener Ring ausgeführt ist.

3. Vorrichtung nach einem der vorhergehenden Ansprüche, **dadurch gekennzeichnet, dass** der Induktionsaufsatz (14) oder Induktionskörper (14a) aus Kupfer gebildet ist.

4. Vorrichtung nach einem der vorhergehenden Ansprüche, **dadurch gekennzeichnet, dass** der Induktionsaufsatz (14) den Querschnitt eines gestülpten Rings aufweist.

5. Vorrichtung nach Anspruch 4, **dadurch gekennzeichnet, dass** der Querschnitt des Rings relativ zur Horizontalen nach oben geneigt ist, vorzugsweise um einen Winkel (α) von 10 Grad bis 20 Grad.

6. Vorrichtung nach einem der vorhergehenden Ansprüche, **dadurch gekennzeichnet, dass** der Konzentratorkörper (11) auf seiner radialen Außenseite in einem Haltering (13) zu Positionierung an der Magnetspulenanordnung steckt, der gleichzeitig auch den Induktionsaufsatz (14) gegenüber dem Konzentratorkörper (11) in Position hält, vorzugsweise in einer Position, in der der Konzentratorkörper (11) und der Induktionsaufsatz (14) flächig miteinander in unmittelbarem Kontakt stehen.

7. Vorrichtung nach Anspruch 6, **dadurch gekennzeichnet, dass** der Haltering (13) ein Kunststoffring ist, der durch gemeinsames, zumindest partielles Umspritzen des Konzentratorkörpers und des Induktionsaufsatzes (14) gebildet ist.

8. Vorrichtung nach Anspruch 7, **dadurch gekennzeichnet, dass** der Kunststoff des Halterings (13) den Induktionsaufsatz (14) ganz oder teilweise umgreift, so dass er die Gefahr, dass sich der Benutzer am erhitzen Induktionsaufsatz verbrennt, herabsetzt.

9. Vorrichtung nach einem der vorhergehenden Ansprüche, **dadurch gekennzeichnet, dass** der Induktionsaufsatz (14) oder Induktionskörper (14a) eine derart große Wärmekapazität bzw. Masse aufweist, dass die End-Temperatur des Induktionsaufsatzes (14) auch nach sechs unmittelbar im Anschluss aneinander erfolgende Zyklen, bei denen jeweils ein kalter Werkzeughalter so weit erhitzt wird, dass das ihm zugeordnete Werkzeug eingesetzt oder herausgenommen werden kann, im Mittel kleiner 80 °C ist.

## Claims

1. A device for clamping and unclamping of tools comprising a tool shaft, by which device a sleeve section (2) of a tool holder (1) comprising a centric receiver opening (4) for a shaft (5) of a rotation tool is inductively heated, which sleeve section retains the shaft (5) of the tool seated in the receiver opening (4) in a press fit, and releases it upon heat up, which device comprises an induction coil assembly with at least one induction coil (6) which can be fed by an electric current for heating the sleeve section (2), and which comprises a cross-head arrangement (9) of magnetisable, electrically non-conductive or substantially electrically non-conductive material, wherein the device comprises a concentrator body (11) which is magnetically conductive and electrically non-conductive or substantially electrically non-conductive, which concentrates the magnetic flux of the induction coil (6) onto the portion of the tool side end of the sleeve section (2) and wherein the cross-head arrangement (9) together with the sleeve section (2) forms a magnetic ring around the induction coil which is at least sectionally closed, **characterized by** the fact that an induction attachment (14) or induction body (14a) out of electrically conductive and magnetically non-conductive material is assigned to the magnetic ring, with the contractor body (11) carrying the induction attachment (14) or the induction body (14a) being arranged in the area of the front side of the coil facing the end of the coil section independently of the concentrator body, with the induction attachment (14) being arranged at the concentrator body (11) or the induction body (14a) in a way that it is fluxed by a portion of the field extending outside the concentrator body (11) in a way that a current is induced in the induction attachment (14) or the induction body (14a) wherein the induction attachment (14) or the induction body (14a) are positioned and physically configured so that an opposite field is generated by the current induced therein, which field superimposes the magnetic field of the coil (6) so that overall at least a local reduction of the magnetic field of the coil (6), which fluxes the exterior of the device, occurs.

2. Device according to one of the preceding claims, **characterized by** the fact that the induction attachment (14) or the induction body (14a) is provided as an electrically closed ring in circumferential direction.

3. Device according to one of the preceding claims, **characterized by** the fact that the induction attachment (14) or the induction body (14a) is made from copper.

4. Device according to one of the preceding claims, **characterized by** the fact that the induction attachment (14) comprises the cross section of a folded over ring.

5. Device according to claim 4, **characterized by** the fact that the cross section of the ring is tilted upward relative to horizontal, preferably by an angle (α) of 10 to 20 degrees.

6. Device according to one of the preceding claims, **characterized by** the fact that the concentrator body (11) is placed with its radial outside into a retaining ring (13) for positioning at the magnetic coil assembly, which retaining ring simultaneously also maintains the induction attachment (14) in position relative to the concentrator body (11), preferably in a position in which the concentrator body (11) and the induction attachment (14) are in direct surface contact with one another.

7. Device according to claim 6, **characterized by the fact that** the retaining ring (13) is a plastic ring which is formed by joint, at least partial molding about the concentrator body and about the induction attachment (14).

8. Device according to claim 7, **characterized by the fact that** the plastic of the retaining ring (13) partially or entirely reaches around the induction attachment (14), so that it reduces the risk that the user bums himself at the heated induction attachment.

9. Device according to one of the preceding claims, **characterized by the fact that** the induction attachment (14) or the induction body (14a) comprises such a high heat capacity or mass that the end temperature of the induction attachment (14) is on average basis less than 80°C, even after six cycles performed in direct sequence, in which cycles a cold tool holder is heated respectively, so that the associated tool can be inserted or removed.

## Revendications

1. Dispositif de serrage et desserrage d'outils dotés d'une tige d'outil, au moyen duquel une portion formant manchon (2) d'un support d'outil (1), dans laquelle est ménagée une ouverture de réception centrale (4) destinée à une tige (5) d'un outil rotatif, est chauffée par induction, laquelle portion formant manchon maintient la tige (5) de l'outil, laquelle siège dans l'ouverture de réception (4), dans le siège de serrage et la libère lorsqu'elle est chauffée, ledit dispositif comportant un agencement de bobines d'induction comportant au moins une bobine d'induction (6) pouvant être alimentée par un courant électrique afin de chauffer la portion formant manchon (2) et un agencement formant culasse (9) en matière magnétisable, électriquement non ou sensiblement non conductrice, le dispositif comportant un corps concentrateur (11), magnétiquement conducteur et électriquement non ou sensiblement non conducteur, qui concentre le flux magnétique de la bobine d'induction (6) sur la région de l'extrémité côté outil de la portion formant manchon (2), et l'agencement formant culasse (9) formant conjointement avec la portion formant manchon (2) un cercle magnétique qui est fermé au moins par portions et qui s'étend autour de la bobine d'induction, **caractérisé en ce qu'**un embout inductif (14) ou corps inductif (14a) en matière électriquement conductrice et magnétiquement non conductrice est associé au cercle magnétique, le corps formant concentrateur (11) supportant l'embout inductif (14) ou le corps inductif (14a) étant disposé indépendamment du corps formant concentrateur dans la région du côté frontal de la bobine qui est dirigé vers l'extrémité de la portion formant manchon (2), l'embout inductif (14a) présentant une disposition telle au niveau du corps formant concentrateur (11) ou le corps inductif (14) présentant une disposition telle qu'il est traversé par une partie du champ s'étendant à l'extérieur du corps formant concentrateur (11) de telle sorte qu'un courant est induit dans l'embout inductif (14) ou le corps inductif (14a), l'embout inductif (14) ou le corps inductif (14a) étant positionné et spatialement conformé de telle sorte qu'un champ inverse est généré par le courant qu'il induit, lequel champ inverse se superpose au champ magnétique de la bobine (6) de telle sorte que cela entraîne dans l'ensemble une diminution au moins locale du champ magnétique de la bobine (6) qui traverse l'environnement extérieur du dispositif.

2. Dispositif selon l'une des revendications précédentes, **caractérisé en ce que** l'embout inductif (14) ou corps inductif (14a) est réalisé sous la forme d'une bague électriquement fermée en soi dans la direction périphérique.

3. Dispositif selon l'une des revendications précédentes, **caractérisé en ce que** l'embout inductif (14) ou corps inductif (14a) est formé en cuivre.

4. Dispositif selon l'une des revendications précédentes, **caractérisé en ce que** l'embout inductif (14) a la section d'une bague emboutie par retournement.

5. Dispositif selon la revendication 4, **caractérisé en ce que** la section de la bague est inclinée vers le haut par rapport à l'horizontale, avantageusement d'un angle (α) allant de 10 degrés à 20 degrés.

6. Dispositif selon l'une des revendications précédentes, **caractérisé en ce que** le corps formant concentrateur (11) est placé sur un côté radial extérieur dans une bague de retenue (13) en vue du positionnement sur l'agencement de bobines magnétiques, laquelle maintient en même temps également l'embout inductif (14) en position par rapport au corps formant concentrateur (11), avantageusement dans une position dans laquelle le corps formant concentrateur (11) et l'embout inductif (14) sont directement en contact à plat l'un avec l'autre.

7. Dispositif selon la revendication 6, **caractérisé en ce que** la bague de retenue (13) est une bague en matière synthétique qui est formée par extrusion conjointe, au moins partielle, du corps formant concentrateur et de l'embout inductif (14).

8. Dispositif selon la revendication 7, **caractérisé en ce que** la matière synthétique de la bague de retenue (13) entoure totalement ou partiellement l'embout inductif (14) de sorte qu'elle réduit le risque que l'utilisateur se brûle au niveau de l'embout inductif chauffé.

9. Dispositif selon l'une des revendications précédentes, **caractérisé en ce que** l'embout inductif (14) ou le corps inductif (14a) a une importante capacité calorifique ou masse de sorte que la température finale de l'embout inductif (14) est en moyenne inférieure à 80° même au bout de 6 cycles successifs pendant lesquels un support d'outil froid est chauffé jusqu'à ce que l'outil qui lui est associé puisse être inséré ou retiré.
